# EUROPEAN PATENT APPLICATION

(11) **EP 4 763 630 A1**
(43) Date of publication of application: **24.06.2026**
(21) Application number: 24383433.0
(22) Date of filing: 20.12.2024
(51) Int. Cl.: B60R 21/0136, B60R 21/0132, B60R 21/34

(54) **SYSTEM FOR ACTIVATING SAFETY MEASURES IN A MOTOR VEHICLE AND VEHICLE**

(71) Applicant: Seat, S.A., 08760 Martorell - Barcelona (ES); Volkswagen Aktiengesellschaft, 38436 Wolfsburg (DE); Skoda Auto A.S., 293 01 Mladá Boleslav II (CZ)
(72) Inventor: Aramburu Boz, Norberto, 08760 Martorell (ES); Alcantara Cardenas, Esteban, 08760 Martorell (ES)
(74) Representative: Elzaburu S.L.P.

(57) **Abstract**

System for activating safety measures in a motor vehicle comprising at least two acceleration sensors, namely at least one first sensor (201) and at least one second sensor (202) connected to a controller module configured to activate at least one vehicle security system upon detection of the signals wherein: the at least one first sensor (201) is configured to be arranged at a first vehicle front-end portion element and the at least one second sensor (202) is configured to be arranged at a second vehicle front-end portion element, the rigidity of the first vehicle front-end portion element being greater than the rigidity of the second vehicle front-end portion element, and; the controller module is configured to determine whether there is a mutual approximation or a mutual separation of the at least one first sensor (201) and the at least one second sensor (202).

## Description

### Technical field

The present invention is directed, according to a first aspect, to a system for activating safety measures in a motor vehicle, especially indicated for detecting an impact of the vehicle against a front obstacle and for discriminating whether said barrier is a soft element or a rigid element.

By means of the detection and discrimination of the type of element or obstacle against which the vehicle has impacted, the system for activating safety measures in a motor vehicle of the present invention is able to activate the corresponding vehicle safety measures for protecting the vehicle driver and/or passengers depending on the type of impact (i.e. depending on the hardness characteristics of the obstacle or element against which the vehicle has impacted).

According to a second aspect of the present invention, it refers to a vehicle which implements such system for activating safety measures.

This invention is preferably applicable in the field of designing, manufacturing and commercializing of vehicles, especially automobiles.

### Background of the invention

Modern vehicles, particularly automobiles, are equipped with multiple sensors configured for sensing different driving-related variables. These sensors are connected to control units, which are designed for analysing the information received from said sensors and for activating certain active or passive safety measures when detecting that some of the variables sensed by means of those sensors reach a predetermined critical value.

An example of this kind of sensors are those configured for activating security measures intended to protect either the occupants of the vehicle or a pedestrian when an impact occurs between the vehicle and the pedestrian. Some safety measures involve, for example, raising or lifting the vehicle's bonnet when detecting an impact against a pedestrian, thereby protecting the pedestrian against a harsh impact against hard parts under the bonnet, such as an impact against the vehicle's engine. Other safety measures involve activating the vehicle's airbags for protecting the occupants of the vehicle against severe impacts.

However, some of the known vehicle sensor systems fail to accurately discriminate whether an impact of the vehicle against an object or obstacle has taken place at low speed or at medium/high speed, and whether the object or obstacle is a soft object or a rigid object.

The discrimination of the type of impact and/or of the type of object against which the impact occurs is of great importance when it comes to decide which safety measures are to be activated as a consequence of the impact that has taken place.

### Summary of the invention

With the aim of providing a solution to the abovementioned problems, the present invention refers to, according to a first aspect, a system for activating safety measures in a motor vehicle and, according to a second aspect, a vehicle which comprises such system for activating safety measures.

The system for activating safety measures in a motor vehicle, according to the present invention, comprises at least one first sensor and at least one second sensor, wherein the at least one first sensor and the at least one second sensor are configured to be arranged at a vehicle front-end portion.

The at least one first sensor and the at least one second sensor are connected to a controller module, the controller module being configured to activate at least one vehicle safety measure (such as one or more vehicle airbags, a safety belt pretensioner system etc.) upon detection of the signals received from the at least one first sensor and the at least one second sensor.

In a novel manner, in the system for activating safety measures in a motor vehicle according to the present invention:
- the at least one first sensor is configured to be arranged at a first vehicle front-end portion element and the at least one second sensor is configured to be arranged at a second vehicle front-end portion element, wherein the rigidity of the first vehicle front-end portion element is greater than the rigidity of the second vehicle front-end portion element;
- the at least one first sensor and the at least one second sensor are acceleration sensors;
- the controller module is configured to determine, upon detection of the signals received from the at least one first sensor and the at least one second sensor, whether there is a mutual approximation or a mutual separation of the at least one first sensor and the at least one second sensor, and;
- the controller module is configured to activate and/or adjust at least one vehicle safety measure based on the determined mutual approximation or mutual separation of the at least one first sensor and the at least one second sensor.

By means of the system for activating safety measures in a motor vehicle described above, it is possible to detect a vehicle impact and to discriminate the type of impact that has taken place (e.g. an impact that has occurred against a soft element or a soft obstacle (such as another vehicle or a big animal) or an impact that has occurred against a rigid element or a rigid obstacle (such as a wall or a guardrail).

In particular, the controller unit is configured to discriminate whether the impact is against a soft or a rigid obstacle based on the determined mutual approximation or mutual separation of the at least one first sensor and the at least one second sensor.

In case there is an impact against a soft element or obstacle, the system for activating safety measures in a motor vehicle of the present invention will detect a mutual separation of the at least one first sensor and the at least one second sensor.

Conversely, in case there is an impact against a rigid element or obstacle, the system for activating safety measures in a motor vehicle of the present invention will detect a mutual approximation of the at least one first sensor and the at least one second sensor.

It is understood that the controller module can use further variables or parameters to discriminate the type of impact, such as other sensors or an accelerometer arranged at the same housing of the controller module. According to the type of impact, the controller module takes the decision whether to activate or not the at least one vehicle safety measure, such as the airbag system. Furthermore, according to the type of impact, the controller module may further adjust the configuration of at least one vehicle safety measure, such as adjust the time activation of the different steps of a dual-step airbag.

Thanks to the discrimination of the type of impact, the system for activating safety measures in a motor vehicle of the present invention can precisely activate the vehicle security systems most appropriate for the particular type of impact that has taken place.

When it is referred to a mutual approximation or mutual separation of the at least one first sensor and the at least one second sensor, it might to be understood that said relative displacement between both sensors takes place during a concrete and limited time period, in particular, during the first instants of the collision.

According to a preferred embodiment of the present invention, the mutual approximation or a mutual separation of the at least one first sensor and the at least one second sensor is in the vehicle forward driving direction. Regardless of the relative displacement between the at least one first sensor and the at least one second sensor in all directions, the controller module only determines the mutual approximation or separation in the direction of travel.

According to a preferred embodiment of the present invention, the at least one second sensor is configured to be arranged at a greater height than the first sensor. The sensor attached to the vehicle front-end section element or component with the least rigidity is on top. This prevents false positives. For example, if the second sensor were at the bottom and arranged in a forward position in relation to the first sensor, and said second sensor hits an element that is not as high as the sensor above, it would come closer, whether the element is rigid or deformable.

Furthermore, according to a preferred embodiment of the present invention, the at least one second sensor is configured to be arranged at a rear position and the at least one first sensor is configured to be arranged at a forward position, in relation to a vehicle forward driving direction.

According to a particular embodiment of the present invention, the at least one first sensor and the at least one second sensor may be configured to be arranged at the same transversal coordinate "Y", in relation to a vehicle transversal direction perpendicular to a vehicle driving direction. It makes possible to decrease the number of sensors arranged in the motor vehicle.

According to a particular embodiment of the present invention, the at least one first sensor is configured to be arranged at a bumper crossbar of the vehicle front-end portion and the at least one second sensor is configured to be arranged at a front-end frame of the vehicle front-end portion. Therefore, the at least one first sensor is arranged in a vehicle front-end section element or component of the vehicle of high rigidity, which is configured to deform and collapse only in high energy impacts against rigid obstacles. On the other hand, the at least one second sensor is arranged in a vehicle front-end section element or component of the vehicle of low rigidity, which is configured to deform and collapse in low energy impacts against obstacles with lower stiffness than the bumper crossbar.

According to a possible embodiment of the invention, the system comprises one first sensor and one second sensor being arranged at the vehicle longitudinal symmetry plane.

In an alternative embodiment of the present invention, the system for activating safety measures in a motor vehicle comprises a plurality of first sensors and a plurality of second sensors, wherein the plurality of first sensors are configured to be arranged symmetrically with respect to a vehicle longitudinal symmetry plane, and wherein the plurality of second sensors are configured to be arranged symmetrically with respect to a vehicle longitudinal symmetry plane.

According to a preferred embodiment of the invention, the control module is configured to discriminate a vehicle impact against a soft element upon determination of a mutual separation of the at least one first sensor and the at least one second sensor.

Furthermore, according to a preferred embodiment of the invention, the control module is configured to discriminate a vehicle impact against a rigid element upon determination of a mutual approximation of the at least one first sensor and the at least one second sensor.

The "soft element" is understood to be more rigid than the second element but less rigid than the first vehicle front-end portion element, while the "rigid element" is understood to be more rigid than the first vehicle front-end portion element.

The present invention further refers to a vehicle comprising a system for activating safety measures in a motor vehicle as described above.

### Brief description of the drawings

As a means for better understanding at least one embodiment of the present invention, the following set of drawings is introduced by way of schematic illustration and in a non-limitative manner.
Figure 1: Shows a schematic perspective view of a vehicle front-end portion, where the position of the first and second sensors has been highlighted by a circle.
Figure 2: Shows a schematic section view of the vehicle's front-end portion shown in Figure 1, where the position of the sensors at different heights and at different locations in relation to the vehicle's driving direction can be appreciated.
Figure 3: Shows a schematic chart illustrating the evolution of the distances between the first sensors and the second sensors, when there is a collision of the vehicle either against a rigid barrier or against a deformable (soft) barrier.
Figure 4: Shows a schematic view of the moment immediately prior to the collision of the vehicle against a rigid barrier.
Figure 5: Shows a schematic view of the moment immediately after the collision of the vehicle against a rigid barrier.
Figure 6: Shows a schematic view of the moment immediately prior to the collision of the vehicle against a deformable (soft) barrier.
Figure 7: Shows a schematic view of the moment immediately after the collision of the vehicle against a deformable (soft) barrier.

### Detailed description

The present invention, as already introduced, refers to a system for activating safety measures in a motor vehicle.

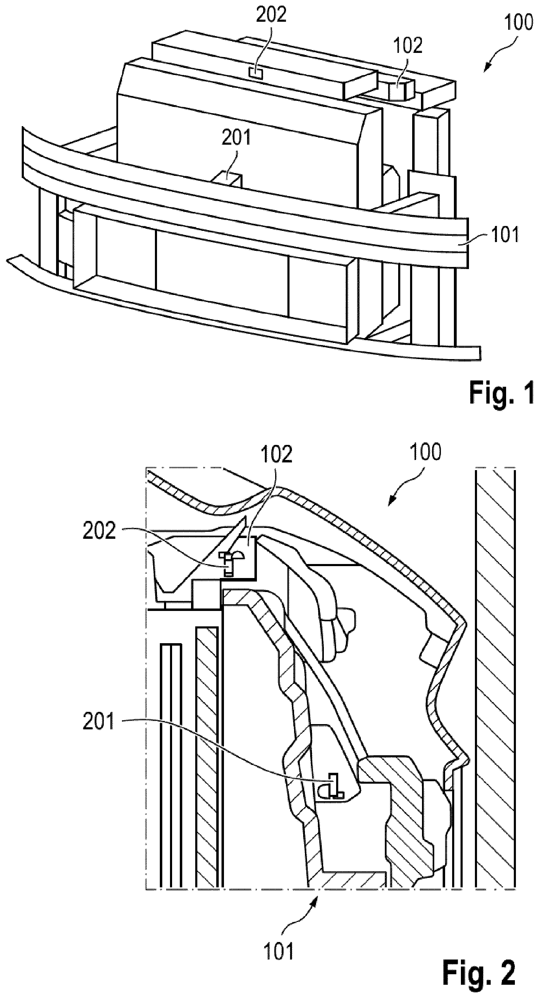

Figure 1 schematically depicts a front-end portion (100) of a vehicle.

As shown in Figure 1, a vehicle front-end portion (100) typically comprises a bumper crossbar (101) (i.e. a rigid (e.g. metallic) front transversal beam) and a front-end frame (102) (i.e. a plastic semi-rigid frame). Bumper, front grill and other front-end components have been removed, with the aim to provide a better understanding of the present invention. Said Figure 1 shows the position of the first and second sensors highlighted by a circle, wherein the first sensor (201) is arranged behind the bumper crossbar (101) and the second sensor (202) is arranged in front of the top part of the front-end frame (102). Thus, the first sensor (201) is arranged at an element whose rigidity is greater than the rigidity of the element at which the second sensor (202) is arranged.

As can be appreciated in Figure 1, the bumper crossbar (101) is located at a low position within the vehicle front-end portion (100), while the top part of the front-end frame (102) is located at a high position within the vehicle front-end portion (100).

As shown in Figure 1, only one first sensor (201) has been arranged in the vehicle front-end section (100), in concrete, in the vehicle longitudinal symmetry plane. Moreover, only one second sensor (202) has been arranged in the vehicle front-end section (100), in concrete, in the same vehicle longitudinal symmetry plane. Therefore, the first sensor (201) and the second sensor (202) are configured to be arranged at the same transversal coordinate "Y", in relation to a vehicle transversal direction perpendicular to a vehicle driving direction.

As can be more clearly appreciated in Figure 2, the bumper crossbar (101) is located at a foremost position within the vehicle front-end portion (100), while the front-end frame (102) is located at a rear position compared to the bumper crossbar (101), within the vehicle front-end portion (100). Said Figure 1 shows the position of the first and second sensors in relation to the driving direction, wherein the second sensor (202) is configured to be arranged at a rear position and the at least one first sensor (201) is configured to be arranged at a forward position, in relation to a vehicle forward driving direction.

The first sensors (201) and the second sensors (202) are preferably acceleration sensors. The controller module is configured to, based on the acceleration measures taken by each acceleration sensor, to easily determine whether or not there is a relative movement between the first sensors (201) and the second sensors (202). In particular, the controller module is configured to determine a mutual approximation or a mutual separation of the at least one first sensor (201) and the at least one second sensor (202). With the aim to simplify the calculation, the controller module determines the relative movement between the first sensors (201) and the second sensors (202) only in the vehicle forward driving direction.

Thus, when comparing (by means of a controller module and/or a processor module) an acceleration sensed by the first sensors (201) with an acceleration sensed by the second sensors (202), the result may render that there is either a mutual approximation between the first sensors (201) and the second sensors (202) or a mutual separation between the first sensors (201) and the second sensors (202).

If there is a mutual approximation between the first sensors (201) and the second sensors (202), this may be caused by a collision of the vehicle against a hard obstacle (such as a hard wall, a column or a streetlight). This kind of collision provokes that the bumper crossbar (101) be initially deformed towards the front-end frame (102), and afterwards the front-end frame (102) be further deformed. Said mutual approximation results in that the second sensor (202) is configured to be arranged at a rear position and the first sensor (201) is configured to be arranged at a forward position, in relation to a vehicle forward driving direction.

Conversely, if there is a mutual separation between the first sensors (201) and the second sensors (202), this may be caused by a collision of the vehicle against a soft obstacle (such as a soft barrier, another vehicle or a big animal) at a medium or high speed. This kind of collision provokes that the front-end frame (102) be deformed while the bumper crossbar (101) keeps undeformed.

In an alternative embodiment of the present invention not shown in the figures, where the first sensor (201) and the second sensor (202) are configured to be arranged at the same distance in relation to a vehicle forward driving direction, the controller module is configured to discriminate a vehicle impact against a rigid element upon determination of an almost zero separation between the at least one first sensor (201) and the at least one second sensor (202). This kind of collision provokes that the bumper crossbar (101) and the front-end frame (102) are deformed towards the front-end frame (102) simultaneously.

Conversely, and following such embodiment where the first sensor (201) and the second sensor (202) are configured to be arranged at the same distance in relation to a vehicle forward driving direction, if there is a mutual separation between the first sensors (201) and the second sensors (202), this may be caused by a collision of the vehicle against a soft obstacle (such as a soft barrier) at a medium or high speed. This kind of collision provokes that the front-end frame (102) be deformed while the bumper crossbar (101) keeps undeformed.

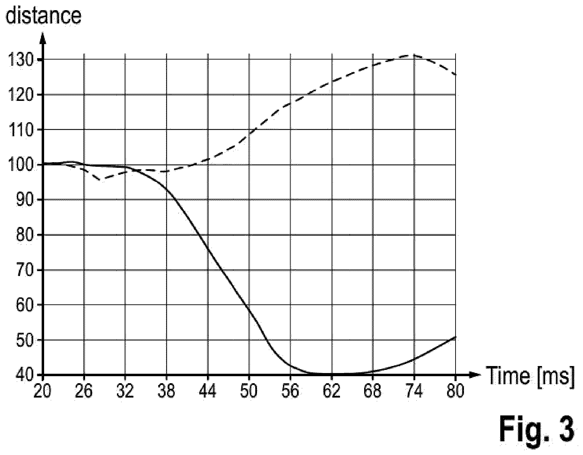

Figure 3 shows a chart where it can be appreciated (in continuous line) the mutual approximation (the separation distance decreases) of the first sensors (201) and the second sensors (202) when a crash takes place against a rigid barrier of the sensors configuration shown in Figure 1 and Figure 2.

Figure 3 further depicts (in dashed line) the mutual separation (the separation distance increases) of the first sensors (201) and the second sensors (202) when a crash takes place against a soft (deformable) barrier of the sensors configuration shown in Figure 1 and Figure 2.

The discrimination of the kind of obstacle against which the vehicle has experienced a collision may help the controller module or processor module decide what kind of security systems much be activated.

As can be seen in Figure 3, the mutual approximation or mutual separation of the at least one first sensor (201) and the at least one second sensor (202) take place during a concrete time period after the collision, as an example between 32 ms and 62 ms. After such concrete time period, the relative displacement of the at least one first sensor (201) and the at least one second sensor (202) is not relevant for discriminating the type of collision.

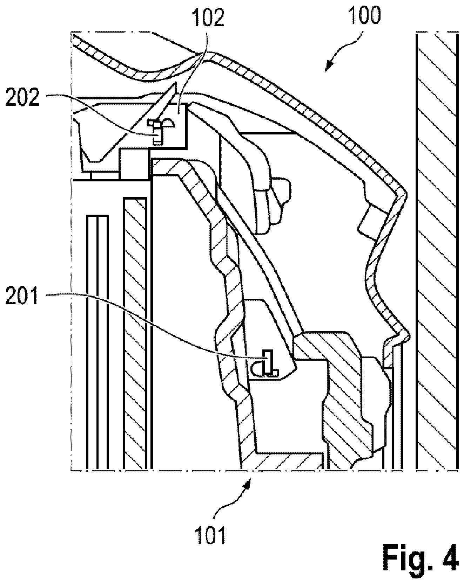

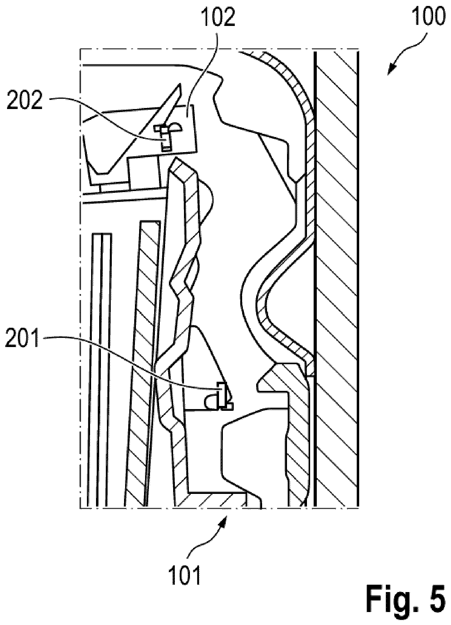

Figure 4 and Figure 5 respectively depict, in a schematic manner, the moments immediately prior and immediately after a collision of the vehicle against a rigid barrier. As can be appreciated in Figure 5, the distance (according to a vehicle's driving direction) between the first sensors (201) and the second sensors (202) decreases after the collision, since the bumper crossbar (101) is deformed as a consequence of the collision of the vehicle against the rigid barrier with a vehicle speed of 16 km/h. Although the low speed of the vehicle, the collision is against a rigid barrier, which produces the deformation of the bumper crossbar (101) and produces that the first sensor (201) is moved rearward and decreasing the distance, in relation to the vehicle's driving direction, in relation to the second sensor (202).

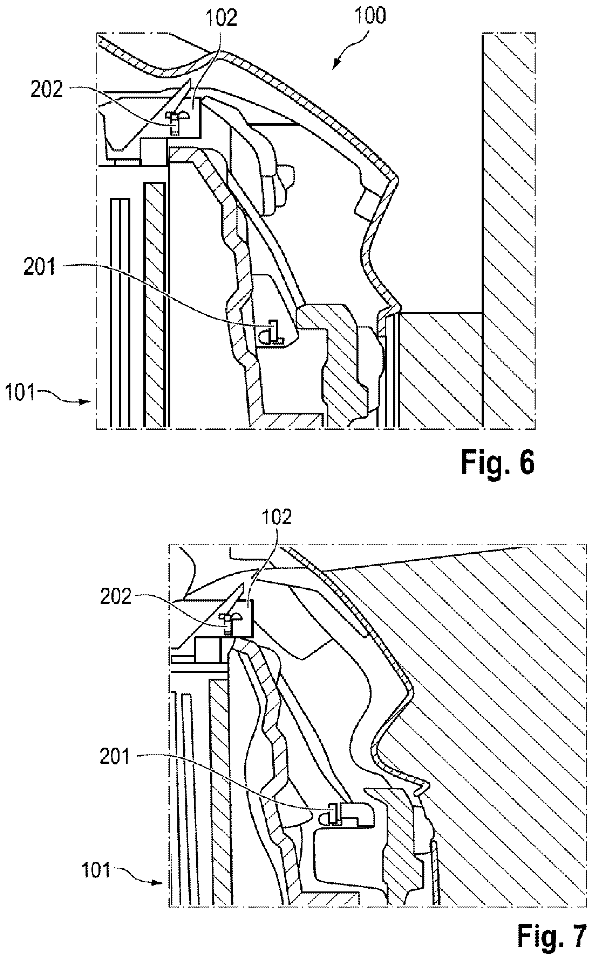

Figure 6 and Figure 7 respectively depict, in a schematic manner, the moments immediately prior and immediately after a collision of the vehicle against a soft (deformable) barrier. In this case, the distance (according to a vehicle's driving direction) between the first sensors (201) and the second sensors (202) increases immediately after the collision with a vehicle speed of 40 km/h, since the front-end frame (101) is deformed as a consequence of the collision of the vehicle against the rigid barrier, while the bumper crossbar (101) is not deformed as it is stiffer than the soft barrier. Although the higher speed of the vehicle, the collision is against a deformable barrier, with a lower rigidity than the bumper crossbar (101), which produces the deformation of only the front-end frame (102) and produces that the second sensor (202) is moved rearward and increasing the distance, in relation to the vehicle's driving direction, in relation to the first sensor (201), which stays at the same position.

Said information related to the mutual approximation or a mutual separation of the at least one first sensor (201) and the at least one second sensor (202) is used to discriminate the type of impact. The system for activating safety measures in a motor vehicle of the present invention can precisely activate the vehicle security systems most appropriate for the particular type of impact that has taken place.

## Claims

1. A system for activating safety measures in a motor vehicle, comprising at least one first sensor (201) and at least one second sensor (202) configured to be arranged at a vehicle front-end portion (100), the at least one first sensor (201) and the at least one second sensor (202) being connected to a controller module, the controller module being configured to activate at least one vehicle safety measure upon detection of the signals received from the at least one first sensor (201) and the at least one second sensor (202), **characterized in that**:
- the at least one first sensor (201) is configured to be arranged at a first vehicle front-end portion element and the at least one second sensor (202) is configured to be arranged at a second vehicle front-end portion element, wherein the rigidity of the first vehicle front-end portion element is greater than the rigidity of the second vehicle front-end portion element;
- the at least one first sensor (201) and the at least one second sensor (202) are acceleration sensors;
- the controller module is configured to determine, upon detection of the signals received from the at least one first sensor (201) and the at least one second sensor (202), whether there is a mutual approximation or a mutual separation of the at least one first sensor (201) and the at least one second sensor (202), and;
- the controller module is configured to activate and/or adjust at least one vehicle safety measure based on the determined mutual approximation or mutual separation of the at least one first sensor (201) and the at least one second sensor (202).

2. The system for activating safety measures in a motor vehicle according to claim 1, **characterized in that** the at least one second sensor (202) is configured to be arranged at a greater height than the first sensor (201).

3. The system for activating safety measures in a motor vehicle according to claim 1 or 2, **characterized in that** the at least one second sensor (202) is configured to be arranged at a rear position and the at least one first sensor (201) is configured to be arranged at a forward position, in relation to a vehicle forward driving direction.

4. The system for activating safety measures in a motor vehicle according to any preceding claim, **characterized in that** the at least one first sensor (201) and the at least one second sensor (202) are configured to be arranged at the same transversal coordinate "Y", in relation to a vehicle transversal direction perpendicular to a vehicle driving direction.

5. The system for activating safety measures in a motor vehicle according to any preceding claim, **characterized in that** the at least one first sensor (201) is configured to be arranged at a bumper crossbar (101) of the vehicle front-end portion (100) and the at least one second sensor (202) is configured to be arranged at a front-end frame (102) of the vehicle front-end portion (100).

6. The system for activating safety measures in a motor vehicle according to claim 4, **characterized in that** it comprises one first sensor (201) and one second sensor (202) being arranged at the vehicle longitudinal symmetry plane.

7. The system for activating safety measures in a motor vehicle according to any of the claims 1 to 5, **characterized in that** it comprises a plurality of first sensors (201) and a plurality of second sensors (202), wherein the plurality of first sensors (201) are configured to be arranged symmetrically with respect to a vehicle longitudinal symmetry plane, and wherein the plurality of second sensors (202) are configured to be arranged symmetrically with respect to a vehicle longitudinal symmetry plane.

8. The system for activating safety measures in a motor vehicle according to any preceding claim, **characterized in that** the control module is configured to discriminate a vehicle impact against a soft element upon determination of a mutual separation of the at least one first sensor (201) and the at least one second sensor (202).

9. The system for activating safety measures in a motor vehicle according to any preceding claim, **characterized in that** the control module is configured to discriminate a vehicle impact against a rigid element upon determination of a mutual approximation of the at least one first sensor (201) and the at least one second sensor (202).

10. The system for activating safety measures in a motor vehicle according to any preceding claim, **characterized in that** the mutual approximation or a mutual separation of the at least one first sensor (201) and the at least one second sensor (202) is in the vehicle forward driving direction.

11. Vehicle **characterized in that** it comprises a system for activating safety measures according to any preceding claim.
